# EUROPEAN PATENT APPLICATION

(11) **EP 4 173 981 A1**
(43) Date of publication of application: **03.05.2023**
(21) Application number: 22200038.2
(22) Date of filing: 20.10.2020
(51) Int. Cl.: B65D 5/32, B65D 5/20, B65D 5/44, B65D 5/56, B29C 51/16

(54) **MANUFACTURING PROCESS OF A HEAT-SEALABLE PACKAGING**

(62) Divisional of application: 20382912.2
(71) Applicant: Solidus Solutions Videcart, S.A., 31486 Ibiricu de Egües ( Navarra) (ES)
(72) Inventor: AGUADO GONZÁLEZ, Ignacio, Ramón, 31486 IBIRICU DE EGÜES (NAVARRA) (ES); ESTEVES DA TORRE, Felisberto, 31486 IBIRICU DE EGÜES (NAVARRA) (ES)
(74) Representative: Herrero & Asociados, S.L.

(57) **Abstract**

Manufacturing process of a heat-sealable packaging, made on an assembly machine comprising first sheet (3) and second sheet (6) loading elements; and elements for applying pressure and heat. It comprises the following steps:
-loading a first sheet (3);
- loading a second sheet (6) and positioning it on a mould, with the first sheet (3) located above the second sheet (6);
- applying pressure on the upper face of the first sheet (3), to fold and form the closed side wall and the base of the container (1);
- positioning of the container (1) already formed over the second sheet (6);
- applying pressure on the upper side of the container (1) base to fold the second sheet (6);
- applying heat for mutual sealing between the container (1) and the already formed shell (2); and
- applying the plastic coating film on the internal side of the packaging.

## Description

### OBJECT OF THE INVENTION

The present invention falls within the technical field of the techniques for manufacturing containers and the use of compression and temperature moulding techniques to join auxiliary pieces to the container and refers in particular to a manufacturing process of a heat-sealable packaging.

More specifically, the packaging, of a tray or barrel type, is made of a cellulose material type cardboard and is specially designed to house food. It has an opening with a lip or flange that is horizontally oriented, located around the perimeter of the opening and designed to form a sealing or welded area with a closure, generally a plastic sheet that acts as an insulating barrier with the outside to prevent the entry of gases and liquids.

### BACKGROUND TO THE INVENTION

For several years the packaging industry has been making great efforts to respond to new trends in safety and sustainability, without compromising the characteristics necessary for the proper maintenance of products. At present, food preservation and packaging is mainly carried out with packaging made of one or several plastics combined, so there arises a need to create a package that substantially reduces the amount of plastic used, replacing it with a more sustainable material such as virgin or recycled cardboard.

On the other hand, heat sealing is a method of closing containers by applying pressure and heat to a plastic film by means of a heat sealer and serves to isolate the products stored in the container from air and other external agents such as bacteria and fungi. Today this objective has been achieved in a competitive way in various types of packaging such as flat skin-type packaging or mushroom-type flow-pack trays.

Various heat-sealable containers are known in the current state of the art. For example, the Spanish patent with publication number ES2697705 describes a complex of consecutively stacked flat sheets, configured to form a container in a single execution, where this complex comprises: a first die-cut flat film, configured to fold and form a wall of the container, comprising a first continuous flange delimited by an external contour and an internal contour, where said internal contour comprises a first portion and the external contour comprises a second portion, where at least a first main flange extends along the first portion of the internal contour in the opposite direction to the second portion of the external contour; and an assembly comprising at least one additional flat sheet, where the perimeter of at least one additional flat sheet is bounded by the first flange of the first flat sheet.

Among the various disadvantages of this patent is the fact that it is necessary to superimpose a minimum of three sheets in order to complete all the walls of the container, in addition to the fact that the size of all the sheets in the set are limited by the perimeter, which complicates the manufacturing process and also means that in the areas where the three sheets are joined, the resulting thickness makes it unfeasible to use existing recycled compact cardboards that are more than 0.6 mm thick. On the other hand, among the disadvantages of the method of obtaining the container, it is worth mentioning that it does not allow the production of containers with high side walls to give rise to yoghurt containers, where the height of the container is greater than the length and width dimensions, and furthermore the process is even more difficult to make rectangular containers with four sides.

US patent US4555381 describes a manufacturing process for a tray-type container, which includes a bottom, walls and outer cardboard edges on the one hand, and a thermoformed layer of synthetic material on the other. The edges are made up of the sides of a frame and are in one piece. The frame is integral with the walls, folded down. The bottom is integral with the walls, folded up and complementary to the walls. All the walls are placed at the same level and are maintained by the layer.

Patent EP2388201 refers to the generation of a corrugated cardboard tray by thermoforming. The problem with this technology is that when generating a tray-type container, wrinkles or folds are created in the corners and on the edge of the tray, so that a completely watertight seal is not obtained.

Patent WO9967143 refers to the generation of a tray-type container with cellulose material by joining two pieces together. In terms of manufacturing, this solution does not allow for adequate use of material, as the starting sheets with which each of the pieces is generated must be die-cut with flanges or protrusions both inside and outside their edges once the container has been formed. In addition, this makes it impossible for these containers to be formed in a single step, as the flaps must be folded or the sheets thermoformed in two directions.

The patent EP2441697 presents a tray-type container that is generated in two manufacturing stages: one to form the container and another stage where the plastic film is thermoformed on the container, which will allow the thermosealing. The problem with this type of design is that it is also made in two stages of manufacture. In addition, this container requires a covering film for its final assembly, as it is the film that acts as a link between the cellulose film tabs.

There is therefore a need to have a heat-sealable packaging with a simple and economical shape, both in terms of materials and procedures, without affecting the strength and other characteristics necessary to ensure its integrity and, therefore, the proper preservation of the products housed inside it.

### DESCRIPTION OF THE INVENTION

A first object of the invention consists of a process of manufacturing a heat-sealable packaging, mainly designed to contain and protect products such as fresh foods with high added value and sensitive to damage by shock, oxidation or shelf life, such as fish, meat, strawberries, cherries, blueberries and similar, although it is not limited to such use.

For this purpose, the packaging is made up of a standard container body covered, at least partially, by an outer shell, which, in addition to providing the container with structural reinforcement, it also provides it with a completely smooth and horizontal lip or flange, located around the perimeter of the opening and designed to form a sealing or welded area with a film or sheet type closure.

The flat geometry of the flange allows a perfect sealing with the sealant film by simply applying heat and pressure simultaneously, without the need for additional substances.

Both the container and the shell are materialized from respective flat die-cut sheets, from a flexible cellulose material such as cardboard, and by means of standard packaging manufacturing processes, starting from these die-cut sheets to be conveniently subjected to standard container forming operations, such as folding, pressing, gluing and/or mutual heat sealing.

Unlike some packaging in the current state of the art, the films that give rise to the container and the shell can have different and independent dimensions and perimeter contours. This allows the creation of a heat-sealable packaging with elongated configurations, such as a popcorn packaging, only from two elements and using standard manufacturing procedures.

The geometry and robustness of the packaging construction make it suitable for direct use as a food container, as well as the possibility of being subjected to a skin process through which a plastic gas barrier can be incorporated. This, together with the flange designed to be able to close it by means of thermosealing, gives the packaging the perfect characteristics to obtain a packaging with a protective atmosphere or a MAP container.

The container is formed by folding the sheet and then joining it to the shell inside a mould with the shape of the final packaging, to which a surface plastic coating film can be adhered with insulation functions and which also allows it to be used as a MAP container and inserted directly into microwave ovens. Finally, pressure and heat are applied so that the joint between both pieces of cardboard is heat-sealed, either with the addition of plastic or with hot-melt adhesives.

### DESCRIPTION OF THE DRAWINGS

To complement the description being made and in order to help a better understanding of the characteristics of the invention, in accordance with a preferential example of practical implementation of the same, is accompanied as an integral part of that description a set of drawings where, for illustrative purposes and not limited, the following has been represented:
Figure 1.- Shows a top perspective view of the packaging according to a first preferential realization.
Figure 2.- Shows an exploded view of the packaging of figure 1.
Figure 3.- Shows a plan view of the die-cut sheet that makes up the internal container of the packaging of figure 1.
Figure 4.- Shows a plan view of the die-cut sheet that makes up the outer shell of the packaging of figure 1.
Figure 5.- Shows an upper perspective view of an exploded packaging according to a second preferred embodiment.
Figure 6.- Shows a top perspective view of the packaging of figure 5.
Figure 7.- Shows a bottom perspective view of the packaging of figure 5.
Figure 8.- Shows a plan view of the die-cut sheet that makes up the internal container of the packaging of figure 5.
Figure 9.- Shows a plan view of the die-cut sheet that makes up the outer shell of the packaging of figure 5.
Figure 10.- Shows a plan view of the die-cut sheet that forms the internal container of a packaging according to a third preferred embodiment.
Figure 11.- Shows a plan view of the die-cut sheet that makes up the outer shell of a packaging according to the third preferred embodiment.
Figure 12.- Shows a schematic view of the sequence of operations in the packaging manufacturing process.

### PREFERRED EMBODIMENT OF THE INVENTION

A detailed explanation of an example of a preferred embodiment of the object of the present invention is given below with the help of the above-mentioned figures.

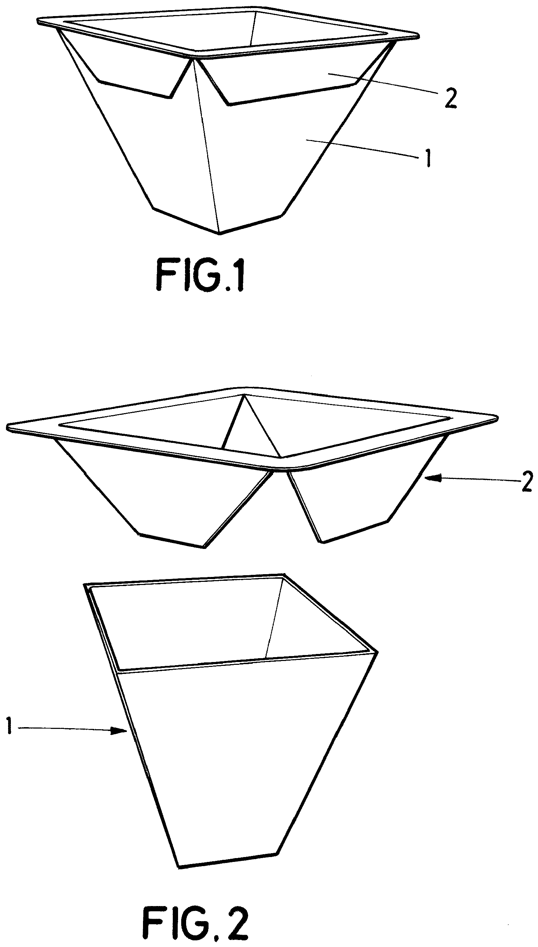

The heat-sealable packaging described herein is made up of two parts which are mutually superimposed and linked, as illustrated in figures 1 and 2, with these parts being an inner part or container (1), with at least one upper opening, and an outer part or shell (2), linked to an upper end of the container (1) in the vicinity of its upper opening. Both parts are linked together by standard forming procedures.

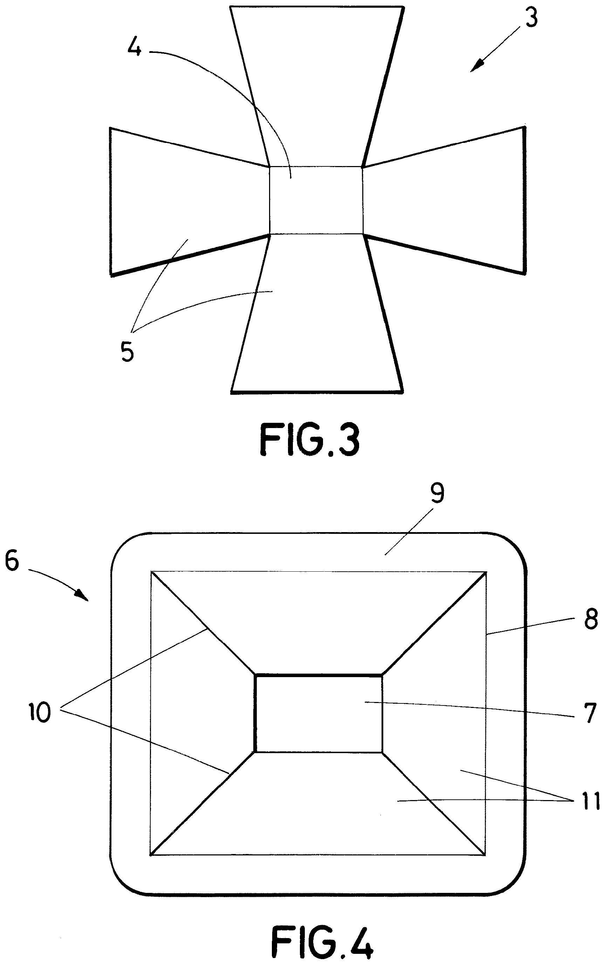

The container (1) is designed to hold a product and is made from a first sheet (3) of cellulose material, in this case cardboard, flat and die-cut as shown in figure 3. This first sheet (3) has a front face and a back face, and on it folding lines are defined to delimit portions in the sheet, more specifically a central sector (4) with a polygonal geometry and first side flaps (5) which start from each of the sides of the central sector (4).

Once the folding lines of the first sheet (3) have been folded to form the container (1), the central sector (4) gives rise to a container (1) base, while the first side flaps (5) give rise to a closed side wall of the container (1), as illustrated in figure 1.

The shell (2) is designed to provide the container (1) with a reinforcing element which, in turn, facilitates the creation of a superior closure by means of heat-sealing. For this purpose, it is made from a second sheet (6) of cellulose material, in this case cardboard, flat and die-cut as shown in figure 4. As can be seen in figure 4 and figure 3, the first sheet (3) and the second sheet (6) have different and independent dimensions and perimeter contours.

The second sheet (6) has a central opening (7), which is a polygonal opening between the front and rear faces of the second sheet (6), and a perimeter folding line (8), which is essentially parallel to an external perimeter edge of the second sheet (6), so that between it and the perimeter folding line (8) there is a portion of sheet intended to form an external perimeter surface (9) of the shell (2), which in turn is intended to subsequently generate a lip or flat flange that acts as a sealing surface for the packaging, around a perimeter edge of the upper opening of the container (1).

Diagonal folding lines (10) extend from each corner of the central opening (7) towards the corners of the second sheet (6) until they intersect with the perimeter folding line (8). These diagonal folding lines (10) delimit second side flaps (11) on the second sheet (6).

Once the folding lines of the second sheet (6) have been folded to form the shell (2), the second side flaps (11) give rise to side walls of the shell (2), designed to cover at least part of the external face of the closed side wall of the container (1) to act as a connecting surface between the shell (2) and the container (1) when the packaging is made.

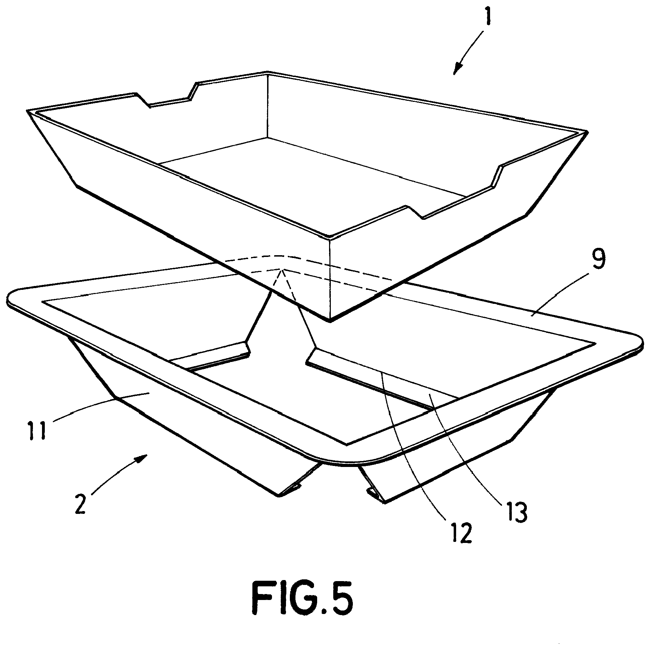

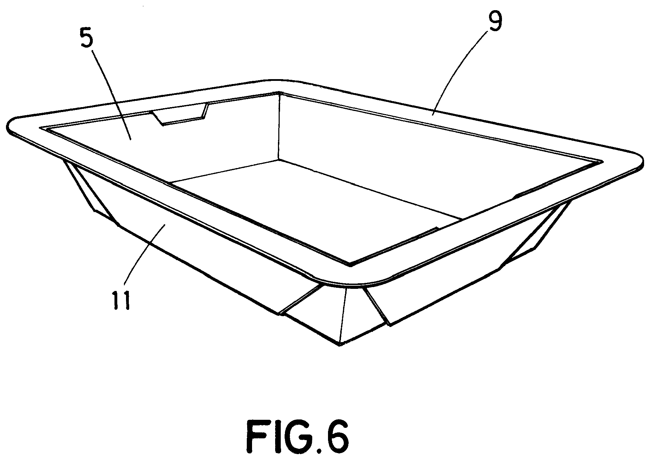

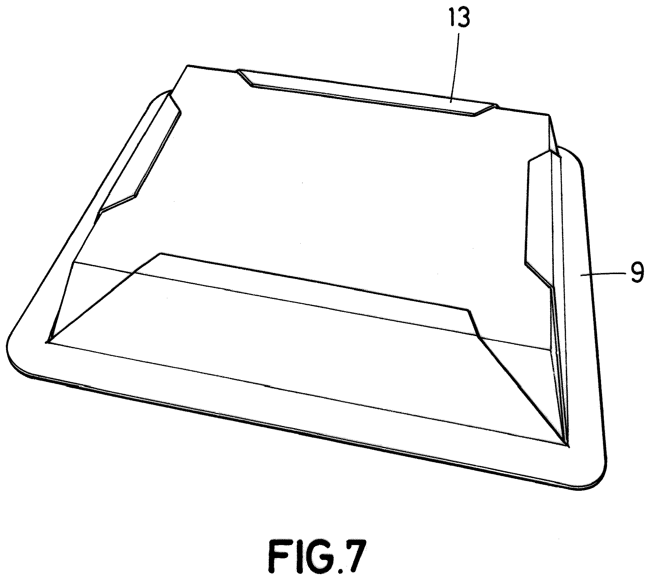

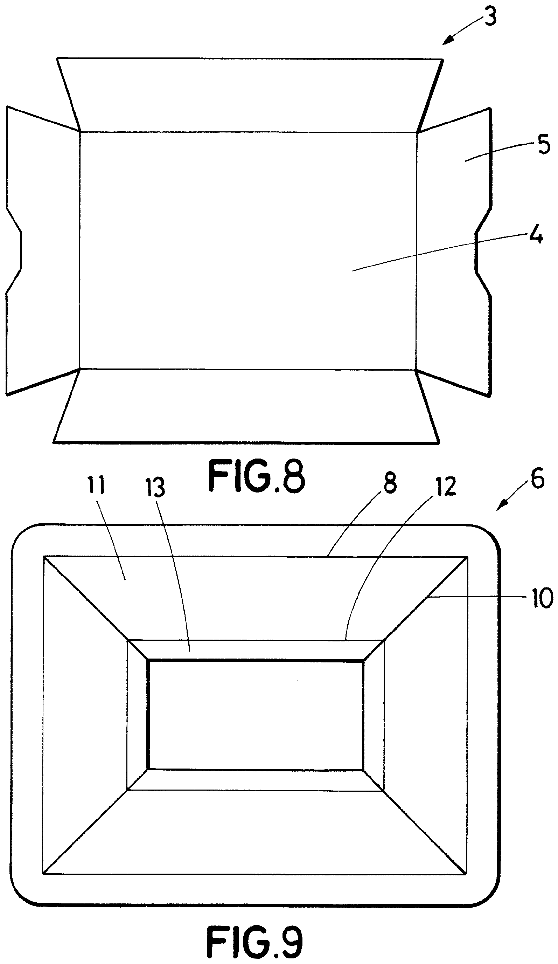

In this first embodiment of the packaging, the closed side wall of the container (1) has high longitudinal dimensions, giving rise to a deep packaging with an elongated configuration, of the type usually used to contain popcorn. Figures 5-11 illustrate second and a third embodiments of the packaging, in which the closed side wall of the container (1) is smaller in length, giving rise to a shallow tray-type packaging of the type normally used to contain fruit or pieces of meat.

As can be seen in these figures, it is envisaged that in the second sheet (6) each of the second side flaps (11) would additionally include a lower folding line (12), located in the vicinity of the central opening (7) and essentially parallel to the corresponding side of this central opening (7), in order to delimit a corresponding lower flap (13) at the lower end of each second side flap (11).

Once the folding lines of the second sheet (6) have been folded to form the shell (2), each lower flap (13) provides an additional surface for joining the shell (2) to the container (1), in this case to cover at least part of the external face of the base of the container (1) when making the packaging.

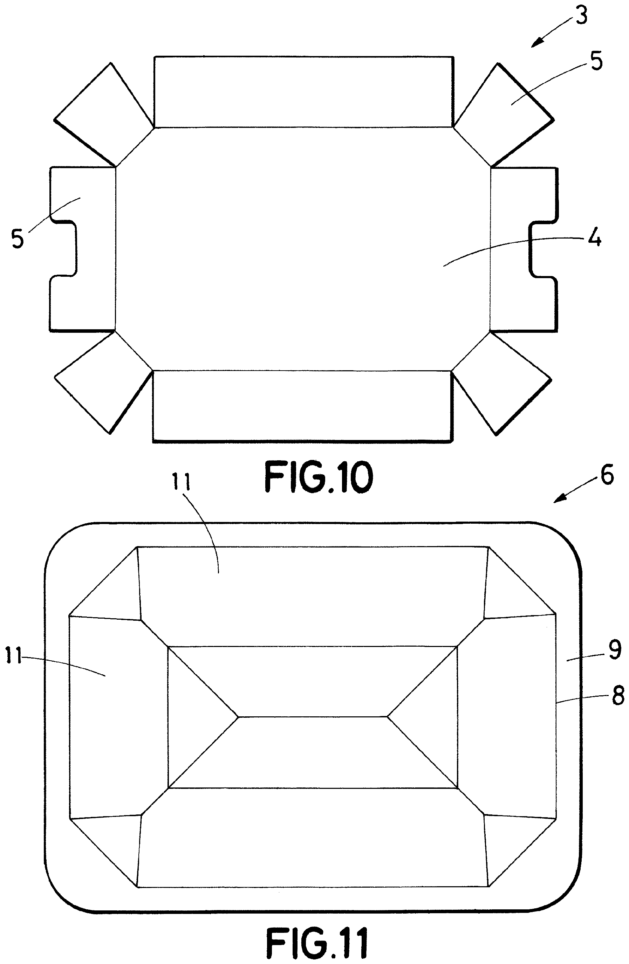

Figures 10 and 11 illustrate a third embodiment of the packaging, in which the container (1) is formed from a first sheet (3) of octagonal geometry.

Once the packaging has been formed after the mutual union of container (1) and shell (2), the preferred embodiment of the packaging further incorporates a plastic coating film, not shown in the attached figures. This sheet covers at least the internal face of the container (1), which is intended to be in direct contact with the contents of the packaging, and the external perimeter surface (9) of the shell (2), which provides the surface for heat sealing.

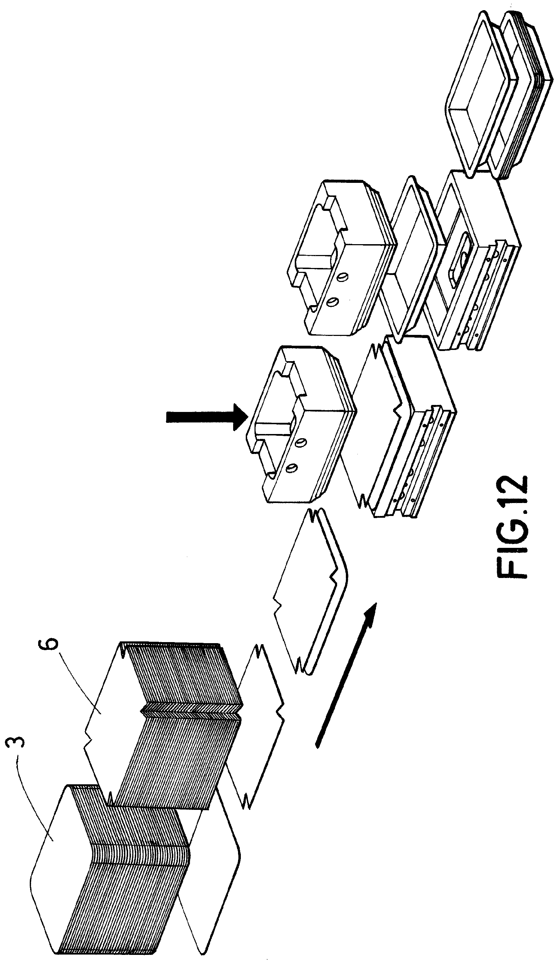

The heat-sealable packaging described above is produced on an assembly machine comprising first (3) and second sheet (6) loading elements and elements for applying pressure and heat, as shown in schematic form in figure 12.

This procedure comprises the following sequence of steps:
- loading a first sheet (3);
- loading a second sheet (6) and positioning it on a mould, with the first sheet (3) located above the second sheet (6);
- applying pressure on the upper face of the first sheet (3), to fold and form the closed side wall and the base of the container (1);
- positioning of the container (1) already formed over the second sheet (6);
- applying pressure on the upper side of the container (1) base to fold the second sheet (6);
- applying heat for mutual sealing between the container (1) and the already formed shell (2); and
- applying the plastic coating film on the internal side of the packaging.

## Claims

1. Manufacturing process of a heat-sealable packaging, which is made on an assembly machine comprising:
- first sheet (3) and second sheet (6) loading elements; and
- elements for applying pressure and heat;
being the manufacturing process **characterised in that** it comprises the following sequence of steps:
- loading a first sheet (3);
- loading a second sheet (6) and positioning it on a mould, with the first sheet (3) located above the second sheet (6);
- applying pressure on the upper face of the first sheet (3), to fold and form the closed side wall and the base of the container (1);
- positioning of the container (1) already formed over the second sheet (6);
- applying pressure on the upper side of the container (1) base to fold the second sheet (6);
- applying heat for mutual sealing between the container (1) and the already formed shell (2); and
- applying the plastic coating film on the internal side of the packaging.

2. Manufacturing process according to claim 1 wherein the step of applying heat further comprises applying plastic adhesives.

3. Manufacturing process according to claim 1 wherein the step of applying heat further comprises applying hot-melt adhesives.
